**Europäisches Patentamt**

**European Patent Office**

**Office européen des brevets**

(19)

(11) Numéro de publication: **0 293 288**
**B1**

(12)

# FASCICULE DE BREVET EUROPEEN

(45) Date de publication du fascicule du brevet:
**18.07.90**

(51) Int. Cl.⁵: **F16H 63/20**

(21) Numéro de dépôt: **88401240.2**

(22) Date de dépôt: **20.05.88**

(54) Dispositif de commande d'une boîte de vitesses de véhicule automobile.

(30) Priorité: **25.05.87 FR 8707334**

(43) Date de publication de la demande:
**30.11.88 Bulletin 88/48**

(45) Mention de la délivrance du brevet:
**18.07.90 Bulletin 90/29**

(84) Etats contractants désignés:
**DE ES GB IT**

(56) Documents cités:
**EP-A- 0 139 261**
**EP-A- 0 148 387**
**FR-A- 2 332 151**
**US-A- 4 510 818**
**US-A- 4 660 434**

(73) Titulaire: **AUTOMOBILES PEUGEOT, 75, avenue de la Grande Armée, F-75116 Paris(FR)**
Titulaire: **AUTOMOBILES CITROEN, 62 Boulevard Victor-Hugo, F-92200 Neuilly-sur-Seine(FR)**

(72) Inventeur: **Kerboul, Guy, 10, clos des Fauvettes, F-78780 Maurecourt(FR)**

(74) Mandataire: **Kohn, Philippe et al, c/o CABINET LAVOIX 2, place d'Estienne d'Orves, F-75441 Paris Cédex 09(FR)**

## Description

La présente invention a pour objet un dispositif de commande d'une boîte de vitesses de véhicule automobile dans laquelle les éléments mobiles, qu'il s'agisse des pignons baladeurs, des baladeurs ou des manchons de synchroniseurs, sont déplacés à l'aide de crosses coulissantes parallèles sur lesquelles agit un doigt principal de commande qui pivote pour faire coulisser alternativement chacune des crosses dans au moins un sens et provoquer le passage d'un rapport. Le doigt principal est lié en rotation et en translation à un arbre de commande qui coulisse, perpendiculairement à la direction commune de coulissement des crosses, pour permettre l'engagement du doigt principal de commande dans une des crosses en vue de la sélection d'au moins un rapport.

Dans ce type de boîte de vitesses à plusieurs rapports de marche avant, et notamment dans le cas d'une boîte à cinq vitesses, le levier de changement de vitesses à deux directions perpendiculaires d'oscillation se déplace selon quatre couloirs parallèles. Les deux couloirs centraux permettent, après sélection, le passage des quatre premiers rapports de marche avant, tandis que les deux couloirs extrêmes latéraux permettent respectivement le passage du cinquième rapport de marche avant et de la marche arrière. Outre le fait qu'elle entraîne de grands débattements du levier de changement de vitesse, cette conception nécessite un mécanisme relativement compliqué qui implique d'importants débattements de la tringlerie de commande reliant le levier de changement de vitesse à la boîte de vitesses. Cette complexité a pour conséquence un encombrement relativement important et une fiabilité réduite du dispositif de commande de la boîte de vitesses.

Le document FR-A 2 332 151 décrit et représente une commande du type mentionné plus haut, qui comporte un doigt auxiliaire de commande susceptible de pivoter autour de l'axe de l'arbre de commande pour faire coulisser une des deux crosses latérales extrêmes dans un premier sens et provoquer le passage du rapport de marche arrière, l'autre crosse latérale extrême ne pouvant être déplacée, par le doigt principal de commande, que dans un seul sens, une première butée transversale empêchant le coulissement de la crosse de marche arrière dans le sens opposé audit seul sens et une seconde butée transversale empêchant le coulissement de ladite autre crosse dans ledit seul sens.

La présente invention a pour but de proposer une commande d'une boîte de vitesses qui remédie aux inconvénients qui viennent d'être mentionnés et qui permette d'effectuer la sélection du rapport de marche avant de rang le plus élevé, et de la marche arrière dans une même position latérale du levier de changement de vitesse c'est-à-dire selon un seul couloir de sélection.

Dans ce but l'invention propose une commande du type de celle décrite dans le document FR-A 2 332 151, caractérisée en ce que ledit seul sens est le sens opposé audit premier sens de manière que l'autre crosse soit déplacée dans ce sens opposé pour sélectionner le rapport de marche avant de rang le plus élevé et en ce que ladite autre crosse est munie d'une rampe avec laquelle coopère le doigt principal de commande lorsqu'il est actionné dans ledit premier sens pour provoquer son dégagement latéral hors de ladite autre crosse et permettre un entraînement en rotation du doigt auxiliaire de commande par des moyens d'entraînement reliant les deux doigts de commande.

Grâce à un tel agencement, et par exemple dans le cas d'une boîte de vitesses à cinq rapports de marche avant, le conducteur n'a plus à déplacer le levier de changement de vitesse que selon trois couloirs parallèles, le passage de la marche arrière et de la cinquième vitesse étant obtenu par déplacement du levier de changement de vitesse, dans l'un de ces couloirs, respectivement dans l'un ou l'autre sens.

Afin de permettre le passage de la marche arrière, malgré la présence de ladite seconde butée transversale, la rampe est orientée de façon à provoquer le dégagement latéral du doigt principal du côté opposé aux autres crosses.

Selon un premier mode de réalisation de l'invention, le doigt auxiliaire de commande est également lié en rotation et en translation à l'arbre de commande ; la distance latérale séparant les deux doigts de commande ainsi reliés étant supérieure à la distance latérale séparant les deux crosses latérales extrêmes.

Selon un second mode de réalisation de l'invention, le dispositif de commande comporte un étrier de commande, monté tournant sur l'arbre de commande par rapport auquel il peut pivoter librement, et immobilisé en translation par rapport au carter de la boîte de vitesses, étrier dont une des branches latérales constitue le doigt auxiliaire de commande engagé en permanence dans la crosse de marche arrière, et dont l'autre branche comporte, à son extrémité, une crosse d'entraînement, juxtaposée à ladite autre crosse de passage du rapport de marche avant de rang le plus élevé, dans laquelle vient s'engager le doigt principal de commande après s'être dégagé latéralement hors de ladite autre crosse lors du passage de la marche arrière.

D'autres caractéristiques et avantages de la présente invention apparaîtront à la lecture de la description détaillée qui va suivre pour la compréhension de laquelle on pourra se reporter aux dessins annexés dans lesquels :

- la figure 1 est une vue simplifiée, en coupe partielle, d'un dispositif de commande d'une boîte de vitesses à cinq rapports réalisé conformément aux enseignements de la présente invention ;
- la figure 2 est un schéma qui montre les déplacements du levier de changement de vitesse qui permettent la selection et le passage de différents rapports de la boîte de vitesses,
- la figure 3a est une vue schématique en perspective du dispositif de commande de la figure 1, le levier de changement de vitesse étant en position de point-mort entre les troisième et quatrième rapports,
- la figure 3b est une vue en coupe selon la ligne 3-3 de la figure 1, le dispositif de commande étant dans la position illustrée à la figure 3a,

- les figures 4a et 4b sont des vues similaires à celles des figures 3a et 3b, le levier de changement de vitesse étant en position de sélection de la cinquième vitesse ou de la marche arrière ;
- les figures 5a et 5b sont des vues similaires à celles des figures 3a et 3b, la cinquième vitesse étant engagée,
- les figures 6a et 6b sont des vues similaires à celles des figures 3a et 3b, la marche arrière étant engagée, et
- les figures 7a et 7b sont des vues, similaires à celles des figures 3a et 3b, d'un deuxième mode de réalisation du dispositif de commande de la présente invention.

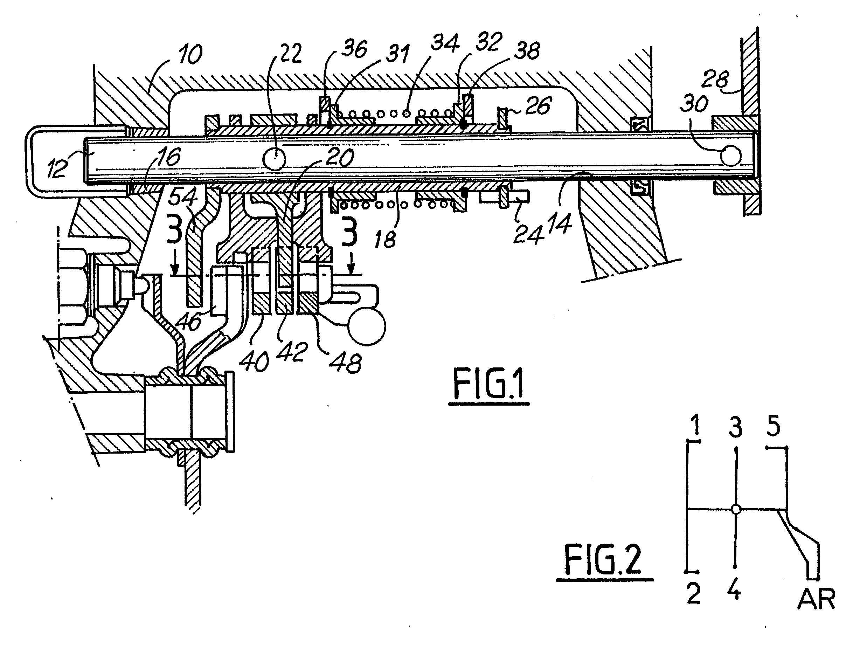

On a représenté à la figure 1 un dispositif de commande interne d'une boîte de vitesse dont on peut voir une partie du carter 10. Le dispositif de commande comprend un arbre de commande 12 qui permet la sélection et le passage des différents rapports. L'arbre 12 est monté à rotation et coulissant dans deux paliers 14 et 16 du carter 10. Un fourreau de commande 18 est monté sur l'arbre de commande 12 auquel il est lié en translation et en rotation. Un doigt principal de commande 20 est monté sur le fourreau 18 et une goupille 22 assure la liaison en translation et en rotation du doigt principal de commande 20 et du fourreau de commande 18 avec l'arbre de commande 12.

Les déplacements latéraux de l'arbre de commande 12 sont assurés au moyen d'un levier de sélection dont une extrémité 24 entraîne une rondelle 26 montée sur le fourreau 18. Les déplacements latéraux, c'est à dire parallèlement à la direction de son axe principal, de l'arbre de commande 12 permettent, d'une façon qui sera expliquée plus avant, la sélection des rapports. La rotation de l'arbre de commande 12 est assurée au moyen d'un levier de passage 28 fixé, à l'aide d'une goupille 30, à une extrémité libre de l'arbre de commande 12. Sous l'action du levier de passage 28, l'arbre de commande 12 peut pivoter autours de son axe dans l'un ou l'autre sens de rotation pour provoquer le passage d'un rapport de la boîte de vitesses.

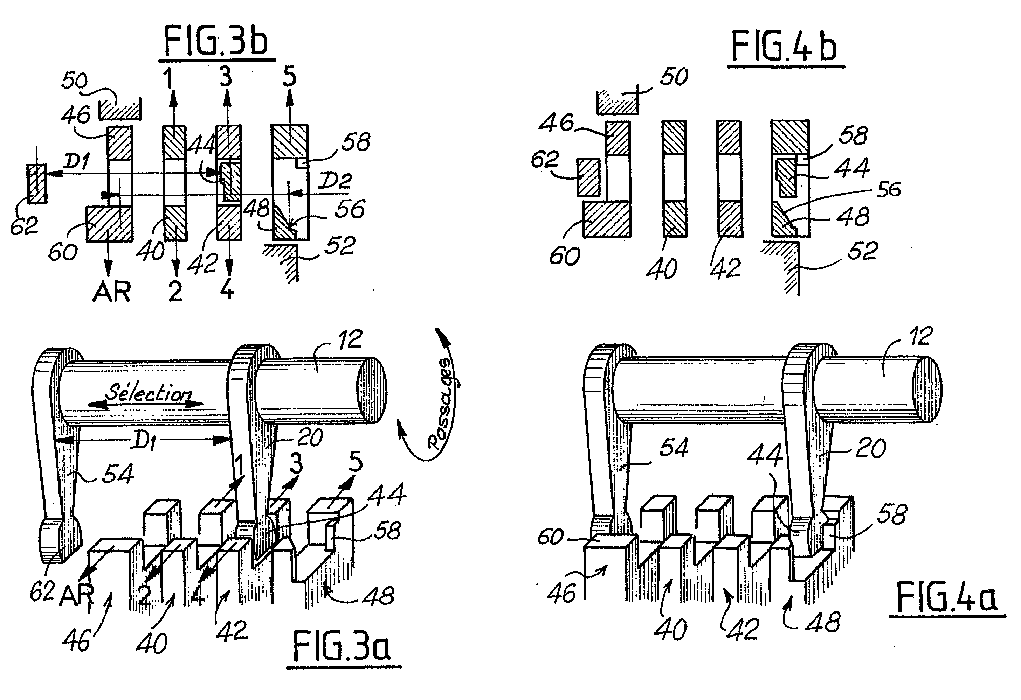

Au repos, c'est à dire dans la position dite de point mort, l'arbre de commande occupe une position illustrée aux figures 1, 3a, et 3b, dans laquelle il est maintenu par un dispositif de recentrage automatique constitué de deux bagues coulissantes 31 et 32 entre lesquelles est interposé un ressort 34 qui tend à les éloigner l'une de l'autre. Les deux bagues coulissantes 30 et 32 prennent respectivement appui sur deux butées fixes 36 et 38 reliées au carter 10.

Le dispositif de commande selon la présente invention est représenté aux figures dans le cadre de son application à la commande du changement de rapport d'une boîte de vitesses à cinq rapports de marche avant et à un rapport de marche arrière. Des éléments mobiles usuels non représentés, pour l'engagement alternatif d'engrenages correspondant au divers rapports, peuvent être déplacés à l'aide de quatre crosses coulissantes respectivement solidaires de coulisseaux parallèles, qui sont agencés dans le carter 10.

Les deux crosses centrales 40 et 42 sont affectées au passage des quatre premiers rapports de marche avant. Dans ce but elles peuvent chacune coulisser dans un premier sens, parallèlement à leur direction commune, pour passer le rapport correspondant de rang pair. Chacune de ces deux crosses peut également coulisser dans le sens opposé pour passer un rapport de marche avant de rang impair. Ainsi, comme cela est indiqué aux figures 3a et 3b, la crosse centrale de gauche 40 permet le passage des premier et second rapports de marche avant tandis que la crosse centrale de droite 42 permet le passage des troisième et quatrième rapports de marche avant.

La sélection et le passage de ces rapports de marche avant est effectuée d'une manière classique, par l'extrémité libre 44 du doigt principal de commande 20 qui peut s'engager latéralement dans un dégagement prévu à cet effet dans chacune des crosses coulissantes, lors d'un mouvement de sélection, puis provoquer le coulissement d'une crosse dans l'un ou l'autre sens pour provoquer le passage d'un rapport sous l'action de rotation qui lui est appliquée par l'arbre de commande 12.

Le dispositif de commande comporte également deux crosses latérales extrêmes 46 et 48. La première crosse latérale extrême 46, à gauche en considérant les figures, permet le passage de la marche arrière. Le passage du rapport de marche arrière s'effectue en provoquant le coulissement de cette première crosse latérale extrême dans le premier sens, c'est à dire vers le bas en considérant la figure 3b, correspondant au sens de passage des deuxième et quatrième rapports de marche avant. Le dispositif de commande comporte une première butée transversale 50 disposée dans le carter 10 en vis à vis de la crosse de passage de marche arrière 46 et qui empêche le coulissement de cette dernière dans le sens opposé, c'est à dire dans le sens correspondant au passage des premier et troisième rapports de marche avant.

L'autre crosse latérale extrême 48, à droite en considérant les figures, permet la sélection et le passage du rapport de marche avant de rang le plus élevé. Le passage du rapport de marche avant de rang le plus élevé, ici le cinquième rapport, s'effectue en faisant coulisser la crosse latérale extrême 48 dans le sens opposé au susdit premier sens correspondant au passage de la marche arrière ou des second et quatrième rapports de marche avant. Le dispositif de commande comporte une seconde butée transversale 52 disposée en vis à vis de la crosse latérale extrême 48 et qui empêche le coulissement de cette dernière dans le premier sens.

Conformément à la présente invention, la sélection et le passage de la marche arrière sont effectués par un doigt auxiliaire de commande 54 tandis que la sélection et le passage du rapport de marche avant de rang le plus élevé sont effectués par le doigt principal de commande comme pour les rapports de marche avant de rang inférieur.

Afin de provoquer le coulissement de la crosse latérale extrême 46, le doigt de commande auxiliaire 54 est suceptible de pivoter autour de l'axe de l'arbre de commande principal 12.

Dans le premier mode de réalisation de l'invention, représenté aux figures 1 à 6b, le doigt auxiliaire de commande 54 est monté sur le fourreau de commande 18, et donc su l'arbre principal de commande 12, par rapport auquel il est lié en rotation et en translation. Ainsi toute rotation ou translation de l'arbre de commande 12 provoque la translation latérale, ou la rotation, simultanée des deux doigts de commande 20 et 54 qui sont reliés entre eux. La distance latérale moyenne D1 séparant les deux doigts de commande 20 et 54 doit, conformément à la présente invention être supérieure à la distance latérale moyenne D2 séparant les deux crosses latérales extrême 46 et 48. Cette caractéristique permet de s'assurer qu'en aucun cas les deux doigts de commande ne se trouvent simultanément en position de passage du rapport de marche arrière et respectivement du rapport de marche avant de rang le plus élevé.

Pour permettre le passage du rapport de marche arrière et du rapport de cinquième par une action sur le levier de changement de vitesse suivant un même couloir, mais dans des sens opposés, la crosse latérale extrême 48 est munie d'une rampe 56. L'extrémité 44 du doigt principal de commande 20 coopère avec la rampe 56 lorsqu'il est actionné dans le premier sens, c'est à dire dans le sens correspondant au passage de la marche arrière, pour provoquer le dégagement latéral de l'extrémité 44 du doigt principal 20 hors de la crosse latérale extrême 48. La rampe inclinée 56 est orientée vers la droite de façon à provoquer le dégagement latéral du doigt principal de commande 20, ainsi que la translation latérale vers la droite de l'arbre de commande 12, c'est à dire du côté opposé aux autres crosses de sélection et de passage.

La crosse latérale extrême 48 possède un prolongement 58 qui constitue une butée latérale avec laquelle coopère l'extrémité 44 du doigt principal de commande 20, lors de son engagement dans cette crosse latérale extrême 48, pour en limiter la course d'engagement vers la droite et le mettre en position de sélection du rapport de marche avant du rang le plus élevé.

La crosse latérale extrême de marche arrière 46 comporte également un prolongement 60 qui s'étend latéralement vers la gauche, c'est à dire du côté opposé aux autres crosses de sélection, et en vis à vis duquel se trouve l'extrémité libre 62 du doigt auxiliaire de commande 54 lorsque le doigt principal de commande 20 est engagé dans l'autre crosse latérale extrême 48, comme on peut le constater aux figures 4a at 4b. Le prolongement latéral 60 permet d'effectuer simultanément un début de passage du rapport de marche arrière tandis que l'extrémité 44 du doigt principal de commande 20 se dégage progressivement vers la droite sous l'action de la rampe 56.

On décrira maintenant le mode de fonctionnement de ce premier mode de réalisation du dispositif de commande selon la présente invention.

En partant de la position de point mort représenté aux figures 1, 3a et 3b la sélection et le passage d'un des quatre premiers rapports de marche avant s'effectue de manière classique en agissant sur l'arbre de commande 12 pour déplacer le doigt principal de commande vers la gauche ou la droite puis provoquer sa rotation dans l'un des deux sens de rotation selon le rapport que l'on veut engager. On peut constater aisément que, grâce à la distance D1 séparant les deux doigts de commande, lors de la sélection d'un de ces quatre premiers rapports de marche avant, le doigt de commande auxiliaire 54 n'est jamais engagé dans la crosse latérale extrême de sélection de marche arrière 46.

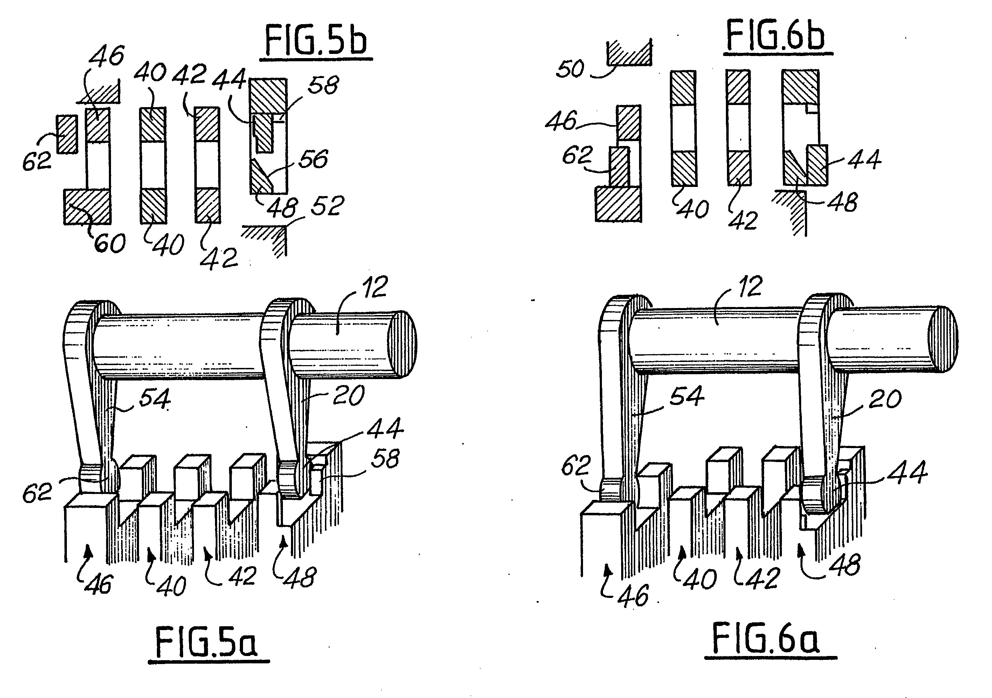

En partant de la position de point mort, la sélection du rapport de marche avant de rang le plus élevé s'effectue en déplaçant le doigt principal de commande 20 vers la droite jusqu'à ce que son extrémité libre 44 vienne occuper sa position représentée aux figures 4a et 4b dans laquelle elle est en appui latéral vers la droite contre la butée latérale extrême 58. Dans cette position, l'extrémité libre 62 du doigt auxiliaire du doigt de commande 54 n'est pas engagée dans la crosse latérale extrême de marche arrière 46 proprement dite, elle est simplement en vis à vis du prolongement latéral 60. Le passage du rapport de marche avant de rang le plus élevé s'effectue (voir fig.5a, 5b) en appliquant une rotation à l'arbre de commande de manière à provoquer le coulissement de la crosse latérale extrême 48 vers le haut, en considérant la figure 4b. Lors de ce déplacement l'extrémité libre 62 du doigt auxiliaire de commande 54 peut se déplacer librement vers le haut parallèlement à la crosse de passage de marche arrière 46 avec laquelle elle n'interfère pas.

En partant de la position de sélection représentée aux figures 4a et 4b, le passage de la marche arrière s'effectue en appliquant une rotation à l'arbre de commande 12 de manière à provoquer un déplacement vers le bas des extrémités libres 44 et 62 des doigts de commande 20 et 54. Lors de ce déplacement vers le bas, en considérant la figure 5b, l'extrémité 44 du doigt de commande 20 vient coopérer avec la rampe 56 pour provoquer son dégagement latéral progressif, tandis que l'extrémité libre du doigt de commande 54 provoque simultanément le coulissement vers le bas de la crosse latérale extrême de marche arrière 46 et donc le passage de la marche arrière. A l'issue de ce mouvement simultané, les deux doigts de commande occupent la position représentée aux figures 6a et 6b.

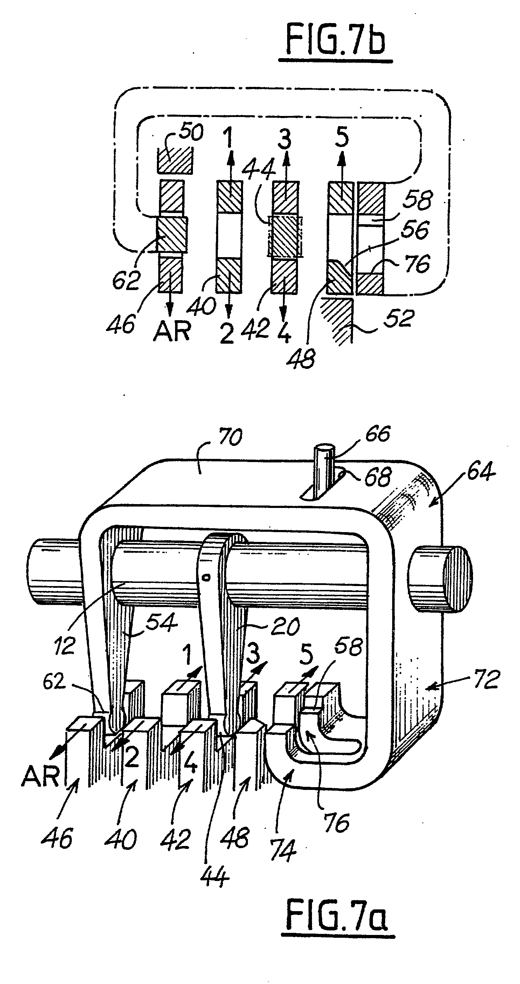

On décrira maintenant le second mode de réalisation de l'invention représenté aux figures 7a et 7b. Les éléments similaires ou identiques à ceux du premier mode de réalisation sont désignés par les mêmes références numériques.

Le dispositif de commande comporte ici un étrier de commande 64 qui est monté sur l'arbre de commande 12 de manière à pouvoir pivoter et coulisser librement par rapport à ce dernier. L'étrier 64 est immobilisé en translation par rapport au carter 10 de la boîte de vitesse par un pion fixe de positionnement latéral 66 qui pénètre dans une lumière transversale 68 formée dans la branche supérieure 70 de l'étrier 64.

La branche latérale de gauche, en considérant les figures 7a et 7b, de l'étrier 64 constitue le doigt auxiliaire de commande dont l'extrémité libre 62 est engagée en permanence dans la crosse latérale extrême de passage de marche arrière 46.

L'autre branche latérale de droite 72 de l'étrier 64 s'étend parallèlement à la branche latérale 54 et comporte à son extrémité une crosse d'entraînement 74. La crosse d'entraînement 74 est juxtaposée à la crosse latérale extrême de passage du rapport de marche avant de rang le plus élevé 48, à droite de cette dernière en considérant les figures.

La crosse d'entraînement 74 comporte un évidement central 76 dans lequel peut pénétrer et s'engager l'extrémité 44 du doigt principal de commande 20 après qu'il se soit dégagé latéralement hors de la crosse 48 sous l'action de la rampe 56. Dans ce mode de réalisation la butée latérale extrême 58 est formée sur la crosse d'entraînement 76.

La sélection et le passage des cinq rapports de marche avant s'effectue d'une manière identique à celle qui a été décrite en référence au premier mode de réalisation de l'invention, les déplacements de l'arbre de commande 12 et du doigt principal de commande s'effectuant indépendamment de ceux du doigt auxiliaire de commande 54.

Le passage du rapport de marche arrière s'effectue en provoquant un déplacement vers le bas (selon la Fig. 7b) de l'extrémité libre 44 du doigt principal de commande 20, lorsque celui-ci est engagé dans la crosse latérale extrême 48. Ce déplacement vers le bas, provoque, par coopération avec la rampe 56, le dégagement latéral vers la droite de l'extrémité libre 44 du doigt principal de commande 20 jusqu'à ce que ce dernier vienne s'engager dans l'évidement 76 de la crosse d'entraînement 74. Une fois cet engagement effectué la prolongation du mouvement vers le bas du doigt 44 provoque simultanément un déplacement dans le même sens de l'extrémité libre 62 du doigt auxiliaire de commande 54 et donc finalement le passage du rapport de marche arrière.

**Revendications**

1. Dispositif de commande d'une boîte de vitesses de véhicule automobile dans laquelle les éléments mobiles d'engagement de rapports sont déplacés à l'aide de crosses coulissantes parallèles (40, 42, 46, −48) sur lesquelles agit un doigt principal de commande (20) qui pivote pour faire coulisser alternativement chacune des crosses dans au moins un sens et provoquer le passage d'un rapport, le doigt principal (20) étant lié en rotation et en translation à un arbre de commande (12) qui coulisse, perpendiculairement à la direction commune de coulissement des crosses, pour permettre l'engagement du doigt principal de commande dans une des crosses en vue de la sélection d'au moins un rapport, le dispositif comportant un doigt auxiliaire de commande (54) susceptible de pivoter autour de l'axe de l'arbre de commande (12) pour faire coulisser une (46) des deux crosses latérales extrêmes dans un premier sens et provoquer le passage du rapport de marche arrière, l'autre crosse latérale extrême (48) ne pouvant être déplacée, par le doigt principal de commande (20), que dans un seul sens, une première butée transversale (50) empêchant le coulissement de la crosse de marche arrière (46) dans le sens opposé audit premier sens, et une seconde butée transversale (52) empêchant le coulissement de ladite autre crosse (48) dans ledit seul sens, caractérisé en ce que ledit seul sens est le sens opposé audit premier sens de manière que l'autre crosse (48) soit déplacée dans ce sens opposé pour sélectionner le rapport de marche avant de rang le plus élevé, et en ce que ladite autre crosse (48) est munie d'une rampe (56) avec laquelle coopère le doigt principal de commande (20) lorsqu'il est actionné dans ledit premier sens pour provoquer son dégagement latéral hors de ladite autre crosse (48) et permettre un entraînement en rotation du doigt auxiliaire de commande (54) par des moyens d'entraînement reliant les deux doigts de commande.

2. Dispositif de commande d'une boîte de vitesses, selon la revendication 1, caractérisé en ce que ladite rampe (56) est orientée de façon à provoquer le dégagement latéral du doigt principal de commande (20) du côté opposé aux autres crosses (40,42).

3. Dispositif de commande d'une boîte de vitesses selon la revendication 1 ou 2 caractérisé en ce que le doigt auxiliaire de commande (54) est lié en rotation et en translation à l'arbre de commande (12) et en ce que la distance latérale (D1) séparant les deux doigts de commande ainsi reliés (20,54) est supérieure à la distance latérale (D2) séparant les deux crosses latérales extrêmes (46,48).

4. Dispositif de commande d'une boîte de vitesses selon la revendication 3, caractérisé en ce que la crosse de marche arrière (46) comporte un prolongement (60) qui s'étend latéralement du côté opposé aux autres crosses (40,42) et en vis à vis duquel se trouve le doigt auxiliaire de commande (54) lorsque le doigt principal de commande (20) est engagé dans ladite autre crosse.

5. Dispositif de commande d'une boîte de vitesse selon l'une des revendications 1 ou 2 caractérisé en ce qu'il comporte un étrier de commande (64), monté tournant et coulissant sur l'arbre de commande (12) et immobilisé en translation par rapport au carter (10) de la boîte de vitesses, étrier dont une des branches latérales constitue le doigt auxiliaire de commande (54) qui est en permanence engagé dans la crosse de marche arrière (46), et dont l'autre branche (72) comporte à son extrémité une crosse d'entraînement (74), juxtaposée à ladite autre crosse (48) de passage du rapport de marche avant de rang le plus élevé, dans laquelle (74) vient s'engager le doigt principal de commande (20) après s'être dégagé latéralement hors de ladite autre crosse (48).

6. Dispositif de commande d'une boîte de vitesses selon d'une quelconque des revendications précédentes caractérisé en ce qu'il comporte une butée latérale (58) qui coopère avec le doigt principal de commande (20) lors de son engagement dans ladite autre crosse (48) pour en limiter la course d'engagement.

7. Dispositif de commande d'une boîte de vitesses selon la revendication 6, prise en combinaison avec l'une des revendications 1 à 4 cractérisé en que la butée latérale (58) est formée sur ladite autre crosse (48).

8. Dispositif de commande d'une boîte de vitesses selon la revendication 6 prise en combinaison avec la revendication 5 caractérisé en ce que la butée latérale (58) est formée sur ladite crosse d'entraînement (74) de l'étrier (64).

## Patentansprüche

1. Steuervorrichtung eines Fahrzeuggetriebes, bei dem die beweglichen Gangschaltungselemente mittels parallel gleitender Schaltköpfe (40, 42, 46, 48) verschoben werden, auf die ein Hauptsteuerfinger (20) einwirkt, der verschwenkt, um abwechselnd jeden Schaltkopf in wenigstens einer Richtung gleiten zu lassen und um einen Gang zu schalten, wobei der Hauptsteuerfinger (20) drehbar und verschiebbar mit einer Steuerwelle (12) verbunden ist, die senkrecht zur gemeinsamen Gleitebene der Schaltköpfe gleitet, um den Eingriff des Hauptsteuerfingers in einen der Schaltköpfe zwecks Auswahl wenigstens eines Ganges zu ermöglichen, wobei die Vorrichtung einen Hilfssteuerfinger (54) aufweist, der um die Achse der Steuerwelle (12) verschwenkbar ist, um einen der beiden seitlichen End-Schaltköpfe (46) in einer ersten Richtung zu verschieben und um den Rückwärtsgang einzuschalten, wobei der andere seitliche End-Schaltkopf (48) vom Hauptsteuerfinger (20) nur in einer einzigen Richtung verschoben werden kann, und wobei ein erster Queranschlag (50) ein Verschieben des Schaltkopfes für den Rückwärtsgang in einer Richtung entgegengesetzt der ersten Richtung verhindert und ein zweiter Queranschlag (52) ein Verschieben des anderen Schaltkopfes (48) in der einzigen Richtung verhindert, dadurch gekennzeichnet, daß die einzige Richtung der ersten Richtung entgegengesetzt ist derart, daß der andere Schaltkopf (48) in der entgegengesetzten Richtung verschoben wird, um den höchsten Vorwärtsgang zu wählen und daß der andere Schaltkopf (48) eine Rampe (56) aufweist, mit der der Hauptsteuerfinger (20) zusammenarbeitet, wenn er in der ersten Richtung betätigt wird, um sein seitliches Lösen vom anderen Schaltkopf (48) zu bewirken und um eine Drehung des Hilfssteuerfingers (54) durch Mitnahmemittel, die die beiden Steuerfinger verbinden, hervorzurufen.

2. Steuervorrichtung nach Anspruch 1, dadurch gekennzeichnet, daß die Rampe (56) derart ausgerichtet ist, daß das seitliche Lösen des Hauptsteuerfingers (20) zu derjenigen Seite erfolgt, die den anderen Schaltköpfen (40, 42) entgegengesetzt ist.

3. Steuervorrichtung nach Anspruch 1 oder 2, dadurch gekennzeichnet, daß der Hilfssteuerfinger (54) drehbar und verschiebbar mit der Steuerquelle (12) verbunden ist, und daß der seitliche Abstand (D1), der die beiden derart miteinander verbundenen Steuerfinger (20, 54) trennt, größer ist als der seitliche Abstand (D2), der die beiden End-Schaltköpfe (46, 48) voneinander trennt.

4. Steuervorrichtung nach Anspruch 3, dadurch gekennzeichnet, daß der Schaltkopf (46) für den Rückwärtsgang eine Verlängerung (60) aufweist, die sich seitlich von derjenigen Seite erstreckt, die den beiden anderen Schaltköpfen (40, 42) entgegengesetzt ist und der gegenüber sich der Hilfssteuerfinger (54) befindet, wenn der Hauptsteuerfinger (20) in den anderen Schaltkopf eingreift.

5. Steuervorrichtung nach Anspruch 1 oder 2, dadurch gekennzeichnet, daß ein Steuerbügel (64) vorgesehen ist, der drehbar und verschiebbar an der Steuerwelle (12) vorgesehen ist und der bezüglich des Getriebegehäuses (10) stationär ist, wobei ein seitlicher Arm des Steuerbügels den Hilfssteuerfinger (54) ausbildet, der dauernd in den Schaltkopf (46) für den Rückwärtsgang eingreift, und der andere Arm (72) an seinem Ende einen Mitnahmekopf (74) neben dem anderen Schaltkopf (48) für den höchsten Vorwärtsgang aufweist, in den der Hauptsteuerfinger (20) eingreift, nachdem er sich seitlich aus dem anderen Schaltkopf (48) gelöst hat.

6. Steuervorrichtung nach einem der Ansprüche 1 bis 5, dadurch gekennzeichnet, daß ein seitlicher Anschlag (58) vorgesehen ist, der mit dem Hauptsteuerfinger (20) bei dessen Eingriff in den anderen Schaltkopf (48) zusammenwirkt, um den Eingriffsweg zu begrenzen.

7. Steuervorrichtung nach Anspruch 6 in Kombination mit einem der Ansprüche 1 bis 4, dadurch gekennzeichnet, daß der seitliche Anschlag (58) am anderen Schaltkopf (48) ausgebildet ist.

8. Steuervorrichtung nach Anspruch 6 in Kombination mit Anspruch 5, dadurch gekennzeichnet, daß der seitliche Anschlag (58) am Mitnahmekopf (74) des Steuerbügels (64) ausgebildet ist.

## Claims

1. A control device for a motor vehicle gearbox in which the movable ratio engagement elements are displaced by means of parallel sliding reciprocating blocks (40, 42, 46, 48) on which acts a main control finger (20) which pivots for alternately sliding each of the reciprocating blocks in at least one direction and causing a ratio change, the main finger (20) being connected for rotation and translatory motion to a control shaft (12) which slides perpendicularly to the common reciprocating block slide direction to allow engagement of the main control finger in one of the reciprocating blocks with a view to selction of at least one ratio, the device comprising an auxiliary control finger (54) capable of pivoting about the axis of the control shaft (12) to make one (46) of the two lateral end reciprocating blocks slide in a first direction and cause the engagement of the reverse gear ratio, the other lateral end reciprocating block (48) being capable of displacement, by the main control finger (20), in only one direction, a first transverse abutment (50) preventing sliding of the reverse reciprocating block (46) in the opposite direction to said first direction, and a second transverse abutment (52) preventing sliding of said other reciprocating block (48) in said single direction, characterized in that said single direction os the opposite direction to said first direction such that the other reciprocating block (48) is displaced in this opposite direction to select the highest forward gear ratio, and in that said other reciprocating block (48) is provided with a ramp (56) with which cooperates the main control finger (20) when it is actuated in said first direction to cause its lateral disengagement from said other reciprocating block (48) and permit driving in rotation of the auxiliary control finger (54) by drive means connecting the two control fingers.

2. A gear box control device according to claim 1, characterized in that said ramp (56) is so oriented as to cause the lateral disengagement of the main control finger (20) from the side remote from the other reciprocating blocks (40, 42).

3. A gear box control device according to claim 1 or claim 2, characterized in that the auxiliary control finger (54) is connected for rotation and translatory motion to the control shaft (12) and in that the lateral distance (D1) separating the two control fingers thus connected (20, 54) is greater than the lateral distance (D2) separating the two lateral end reciprocating blocks (46, 48).

4. A gear box control device according to claim 3, characterized in that the reverse reciprocating block (46) comprises an extension (60) which extends laterally on the side remote from the other reciprocating blocks (40, 42) and facing which is located the auxiliary control finger (54) when the main control finger (20) is egaged in said other reciprocating block.

5. A gear box control device according to either one of claims 1 or 2, characterized in that it comprises a control stirrup (64) mounted rotatably and slidably on the control shaft (12) and immobilized as far as translatory motion with respect to the case (10) of the gearbox is concerned, one of the lateral branches of said stirrup constituting the auxiliary control finger (54) which is permanently engaged in the reverse reciprocating block (46), and the other branch (72) of said stirrup comprising at its end a drive reciprocating block (74) in juxtaposed relation to said other reciprocating block (48) for engaging the highest forward gear ratio, in which reciprocating block (74) the main control finger (20) engages after being disengaged laterally from said other reciprocating block (48).

6. A gear box control device according to any one of the preceding claims, characterized in that it comprises a lateral abutment (58) which cooperates with the main control finger (20) at the time of its engagement in said other reciprocating block (48) to limit the engagement travel thereof.

7. A gear box control device according to claim 6, in combination with any one of claims 1 to 4, characterized in that the lateral abutment (58) is formed on said other reciprocating block (48).

8. A gear box control device according to claim 6 in combination with claim 5, characterized in that the lateral abutment (58) is formed on said drive reciprocating block (74) of the stirrup (64).

FIG.1

FIG.2

## FIG.3b

50
46
D1
62
60
44
40
42
48
1 3 5
58
56
D2
52
AR 2 4

## FIG.3a

Sélection
12
D₁
20
Passages
54
1 3 5
44
58
62 AR
46 40 42 48

## FIG.4b

50
46
62
60
44
40 42
58
56
48
52

## FIG.4a

54
44
20
60
46 40 42 48
58
12

EP 0 293 288 B1

EP 0 293 288 B1

FIG.6b

FIG.6a

FIG.5b

FIG.5a

## FIG.7b

## FIG.7a